Europäisches Patentamt

**European Patent Office**

**Office européen des brevets**

(11) Numéro de publication: **0 225 237**
**A1**

(12) **DEMANDE DE BREVET EUROPEEN**

(21) Numéro de dépôt: **86402440.1**

(22) Date de dépôt: **30.10.86**

(51) Int. Cl.⁴: **B 01 F 5/04**
**F 04 F 5/46, C 02 F 3/20**
**A 01 K 63/04**

(30) Priorité: **30.10.85 FR 8516150**

(43) Date de publication de la demande:
**10.06.87 Bulletin 87/24**

(84) Etats contractants désignés:
**AT BE CH DE ES FR GB GR IT LI LU NL SE**

(71) Demandeur: **Dodier, Jacques**
**7, rue Saint Conwoion B.P. 57**
**F-35601 Redon Cédex(FR)**

(72) Inventeur: **Dodier, Jacques**
**7, rue Saint Conwoion B.P. 57**
**F-35601 Redon Cédex(FR)**

(74) Mandataire: **Martin, Jean-Jacques et al,**
**Cabinet REGIMBEAU 26, Avenue Kléber**
**F-75116 Paris(FR)**

(54) **Dispositif de traitement de liquides par injection hydrocinétique.**

㊼ Selon l'invention, on met en oeuvre dans un réservoir (102) contenant une masse d'eau à traiter un ensemble d'injecteurs (120a, 120b) destinés à produire en sortie un flux lamelliforme à grande vitesse dans lequel on a créé, par effet de Venturi, un phénomène de cavitation.

Les injecteurs sont inclinés de 20 à 40° par rapport à la surface de l'eau, et leur orifice de sortie est situé à quelques centimètres au-dessus de ladite surface.

Les jets cavitants ont pour double effet de créer dans le milieu un grand nombre d'ions oxygène négatifs, ainsi qu'une vibration infra-sonique. On améliore ainsi sensiblement les caractéristiques chimiques et micro-biologiques de l'eau ; on diminue notamment les taux de coliformes.

Application au traitement des eaux résiduaires, ainsi que des eaux de pisciculture, d'aquaculture...

FIG.5

EP 0 225 237 A1

# DISPOSITIF DE TRAITEMENT DE LIQUIDES PAR INJECTION HYDROCINETIQUE.

La présente invention concerne d'une façon générale les dispositifs de traitement des eaux, notamment à des fins d'épuration ou encore dans le cadre de la pisciculture, de l'aquaculture, etc... Elle concerne plus particulièrement un dispositif de traitement par injection hydrocinétique mettant à profit les effets de la cavitation pour les applications ci-dessus.

Il est bien connu que les injecteurs à effet de cavitation hydrodynamique sont utilisés bénéfiquement dans le domaine médical, en particulier dans le cadre du traitement par balnéothérapie. Un tel traitement combine sur le patient un effet hydromécanique, par lequel sont engendrées des vibrations infra-soniques, avec un effet chimique tendant à créer des ions négatifs de part et d'autre de la surface de l'eau dans laquelle s'effectue le traitement.

La présente invention a pris naissance à l'occasion de diverses investigations tendant à rechercher si de tels phénomènes pouvaient avoir des conséquences sur le milieu proprement-dit dans lequel ils ont lieu, et conduire à des résultats inattendus et avantageux dans le domaine industriel en général, et en particulier dans le domaine du traitement des eaux résiduaires ou analogues.

Ainsi, il a fallu procéder à de nombreux essais, avec à chaque fois des modifications et mises au point complexes d'un générateur d'effet de cavitation hydrodynamique, pour découvrir que l'on obtenait des résultats particulièrement intéressants notamment dans le traitement de pollutions de types divers dans les eaux usées ou rejetées.

Par suite, l'invention concerne un dispositif pour le traitement d'un liquide par injection hydrocinétique, afin d'intervenir sur sa nature physico-chimique et/ou biologique, caractérisé en ce qu'il comprend au moins un injecteur constitué par :

- un conduit d'arrivée d'eau sous pression ;

- un étranglement convergent à effet de Venturi disposé dans le conduit;

- une chambre d'expansion disposée immédiatement en aval dudit étranglement ;

- une chambre de mise en forme dont la section présente une dimension horizontale sensiblement supérieure à celle de la chambre d'expansion et une dimension verticale sensiblement inférieure à celle de la chambre d'expansion ; et

- une chambre d'accélération, formant également orifice de sortie en forme de fente, d'une section plus petite que la section de la chambre de mise en forme ;

chaque injecteur engendrant ainsi un écoulement lamelliforme d'eau cavitante à grande vitesse, en donnant naissance à des vibrations infra-soniques et à des ions oxygène négatifs dans la phase vapeur de l'écoulement ;

chaque injecteur étant disposé au-dessus de la surface libre d'une masse de liquide à traiter avec une inclinaison de l'ordre de 20 à 40° par rapport à celle-ci, et avec une distance verticale entre son orifice-fente de sortie et ladite surface comprise entre 2 et 50cm, et l'orifice-fente de sortie s'étendant sensiblement parallèlement à ladite surface.

L'invention sera mieux comprise à la lecture de la description détaillée suivante de modes de réalisation préférés de celle-ci, donnée à titre d'exemple et faite en référence aux dessins annexés, sur lesquels :

la figure 1 est une vue en perspective, partiellement arrachée, d'un injecteur hydrocinétique selon un mode de réalisation préféré de l'invention,

la figure 2 est une vue de côté en coupe de l'injecteur de la figure 1,

la figure 3 est une vue de dessus partielle de l'injecteur des figures 1 et 2,

la figure 4 illustre, en perspective, une variante d'un élément de sortie de l'injecteur de l'invention, et

la figure 5 est une vue de côté en coupe partielle d'une installation de traitement des eaux équipée d'injecteurs selon l'invention.

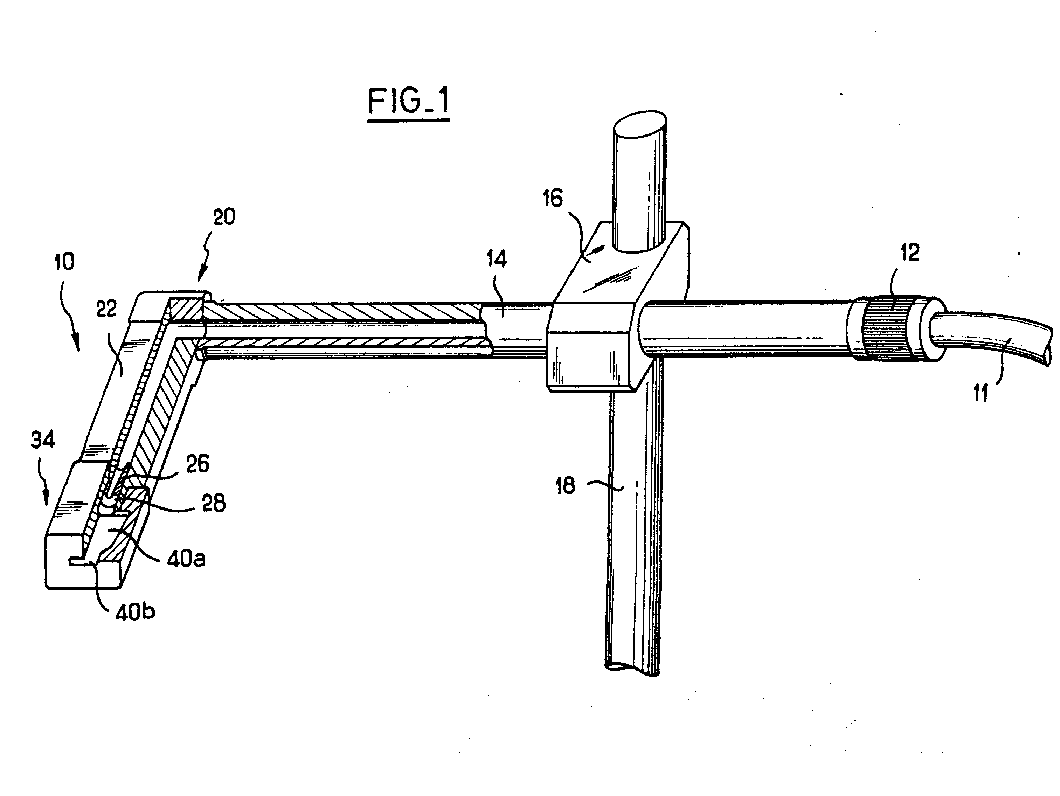

En référence tout d'abord à la figure 1, un injecteur hydrocinétique de l'invention, désigné dans son ensemble par la référence 10, est monté sur un ensemble destiné à son alimentation en eau sous pression et permettant de lui donner une orientation et une hauteur quelconques choisies. Cet ensemble comprend un tuyau souple 11 d'alimentation en eau sous pression raccordé par un embout approprié 12 à une première extrémité d'un conduit tubulaire rigide 14. Par l'intermédiaire d'un élément de liaison 16 et d'un montant 18, le conduit tubulaire 14 peut être amené à pivoter dans un plan horizontal et autour de son axe, et sa hauteur et sa position dans l'élément 16 peuvent être ajustées de façon continue. L'injecteur hydrocinétique 10 est monté à l'autre extrémité du conduit 14 par l'intermédiaire d'un raccord désigné dans son ensemble par la référence 20.

En référence maintenant aux figures 1 à 3, l'injecteur proprement-dit comprend un conduit 22 d'amenée d'eau dans lequel est formé un passage longitudinal traversant 24 de section circulaire, qui communique par une première extrémité avec l'ensemble d'alimentation en eau à travers le raccord 20.

Dans la région de la seconde extrémité du passage 24 est monté un convergent tronconique 26 dont la section extérieure est intimement adaptée à celle du passage 24. Dans le présent exemple, l'angle au sommet du convergent 26 est de l'ordre de 30°, et son coefficient de Venturi Cv est de l'ordre de 100. Rappelons ici que le coefficient de Venturi est conventionnellement exprimé par :

$$Cv = \left(\frac{surface\ d'entrée}{surface\ de\ sortie}\right)^2 - 1$$

D'une façon générale, on préfèrera un coeffi-cient compris entre 1 et 400.

Le convergent tronconique 26 est monté de manière réglable en position axiale à l'intérieur du passage 24 dans la région de la seconde extrémité de celui-ci, mais avec cependant un écartement suffisant par rapport à la face extrémité associée du conduit 22 pour définir en aval du convergent une chambre d'expansion 28. Le convergent 26 peut être immobilisé dans sa position correcte par exemple à l'aide d'une vis de blocage 30 traversant une paroi du conduit 22. Le conduit 22 se termine à sa seconde extrémité par un prolongement cylindrique 32, à des fins expliquées ci-dessous.

L'injecteur comporte en outre une tête d'injection 34 qui est de forme générale parallèlépipédique et qui présente sur sa première face d'extrémité un creusement cylindrique destiné à recevoir le prolongement 32. Des joints d'étanchéité 36 sont interposés entre le prolongement et le creusement, et des pions 38 reçus intimement dans des logements appropriés assurent la fixation de la tête 34 et du conduit 22.

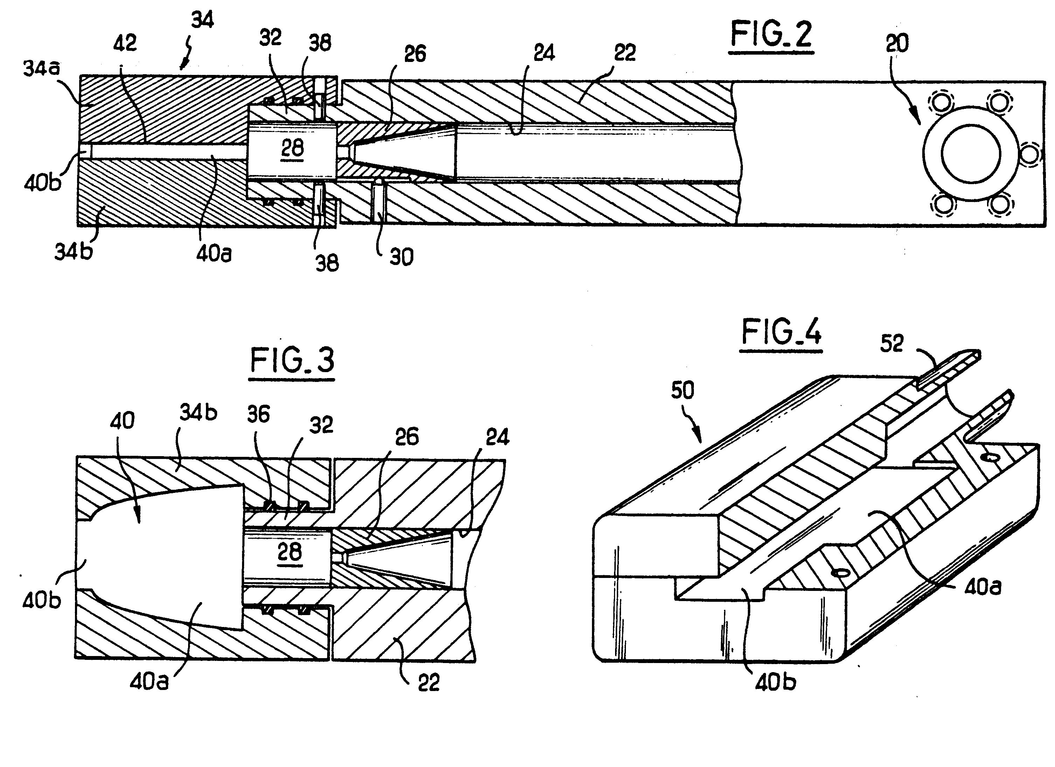

Comme le montrent en particulier les figures 1 et 3, on a formé dans la tête 34 un passage 40 traversant s'étendant entre le fond du creusement et sa seconde face d'extrémité. Le passage 40 est de forme générale aplatie, sa hauteur étant sensiblement inférieure du diamètre du passage 24 du conduit 22. Le passage 40 comprend une première partie 40a, située immédiatement en aval de l'extrémité libre du passage cylindrique 24 du conduit 22. La largeur de la partie 40a est initialement supérieure du diamètre du passage 24 du conduit 22, mais diminue progressivement vers une seconde partie 40b, de même hauteur mais de largeur réduite, qui tient lieu d'orifice-fente de sortie de l'injecteur.

De façon avantageuse, la tête 34 de l'injecteur sera réalisée en deux parties superposées 34a et 34b, le passage 40 étant défini par une cavité creusée dans la face supérieure de la partie inférieure 34b. Un joint d'étanchéité 42 sera alors interposé entre les deux parties 34a et 34b.

Sur la figure 4 est illustrée, en vue en perspective partiellement arrachée, une variante de la tête de l'injecteur. Dans cette variante, le raccordement entre la tête 50 et le conduit d'amenée d'eau (non représenté) est effectué par un prolongement cylindrique 52 de la tête vers l'arrière, apte à être mis en place et fixé dans un creusement correspondant dudit conduit. Dans ce cas, le convergent tel que décrit plus haut pourra être placé dans le passage de ce prolongement cylindrique, et non plus dans le passage 24 du conduit 22.

Par ailleurs, dans cette variante de réalisation, la partie 40a du passage 40 traversant la tête d'injection ne présente pas de continuité avec l'orifice-fente de sortie 40b, comme c'était le cas dans le mode de réalisation des figures 1 à 3.

Avantageusement, dans le cadre du traitement des eaux résiduaires, on prévoira, en association avec un ou plusieurs injecteurs hydrocinétiques, un conduit de reprise des eaux qui sera raccordé à une pompe, de puissance appropriée pour fournir la pression souhaitée, la sortie de la pompe étant raccordée à l'entrée du ou des injecteurs. On pourra prévoir une seule pompe pour l'ensemble ou bien, de façon préférée, on prévoira une pompe pour chaque injecteur, disposée immédiatement en amont de celui-ci, à des fins expliquées plus loin.

Par ailleurs, les indications géométriques

donnés ci-dessus ne sont aucunement limitatives, et l'invention couvre également toute forme ou géométrie des divers organes décrits telle qu'elle donne lieu aux phénomènes exposés ci-dessous.

Dans un injecteur tel que décrit ci-dessus, on observe les phénomènes hydrocinétiques suivants : lorsque de l'eau sous pression est appliquée à l'entrée de l'injecteur (une pression de 2 à $10.10^5$ pascals sera appropriée), le convergent tronconique 26 a pour premier effet, en coopération avec la chambre d'expansion 28 située en aval de celui-ci, de créer un phénomène de cavitation, bien connu en soi. Ce phénomène, engendré par la brusque chute de pression dans l'eau à la sortie du convergent, crée en sortie un flux cavitant de grande vitesse, à deux phases, liquide et vapeur. Ce flux va développer deux fonctions principales, à savoir une fonction chimique due à l'apparition dans la phase vapeur d'ions oxygène négatifs (aéro-ions singulets), et une fonction hydromécanique due à la création dans le flux d'une vibration infra-sonique, provoquée par les ondes de choc engendrées par les différences de pression importantes au sein du flux. La chambre 40a a pour objet de donner au flux un caractère lamelliforme, et l'orifice 40b, de même hauteur mais de section réduite, a pour objet d'accélérer l'écoulement en sortie.

De nombreux essais de traitement de liquides avec des injecteurs hydrocinétiques du type décrit ci-dessus ont été effectués. Les deux premiers essais ont concerné deux deux types d'eaux polluées et ont été effectués dans un réservoir d'une capacité de l'ordre de quelques centaines de litres. Un injecteur du type décrit était disposé au-dessus de la surface de l'eau, avec une inclinaison de 30° par rapport à l'horizontale et à une hauteur telle que l'extrémité libre de l'injecteur soit située à 4 cm au-dessus de ladite surface de l'eau. Une pompe centrifuge d'une puissance de 2,2 kW assurait une reprise d'eau au fond du réservoir pour l'appliquer à l'entrée de l'injecteur, avec une pression réglable et bien définie. Un filtre était interposé dans le circuit de reprise. On peut noter ici qu'en disposant la sortie de la pompe immédiatement en amont de l'injecteur, on évite avantageusement un amortissement de la vibration infra-sonique du jet.

Conformément à l'invention, la mise en oeuvre d'un tel appareillage a pour effet de créer en sortie de l'injecteur un jet à cavitation qui vient frapper la surface libre de l'eau. Ce jet présente, comme on l'a indiqué plus haut, les caractéristiques essentielles suivantes :

- vitesse élevée, avec un angle de l'ordre de 30° par rapport à la surface de l'eau à traiter ;
- présence importante d'une phase vapeur riche en ions oxygène négatifs (aéro-ions singulets) ;
- présence d'une vibration infra-sonique, de l'ordre de 0 à 15 hz ; et
- caractère lamelliforme, donc pénétrant.

Un tel type de jet va propager sa cavitation dans une grande partie de la masse d'eau avec, dans cette masse, une agitation importante d'ions oxygène négatifs. Par ailleurs, la vibration infra-sonique est transmise au milieu aqueux. C'est pourquoi l'on peut parler d'oxy-ionisation cavitante.

Les essais effectués ont pour objet d'étudier le caractère stimulant, sur les plans physico-chimique et microbiologique, des effets combinés ci-dessus dans le cadre du traitement d'eaux résiduaires.

Ainsi, pour chacun des essais, on s'est attaché à effectuer deux sortes d'examens. Des examens physico-chimiques ont porté sur :

- la mesure du pH ;
- la mesure de la quantité de matières organiques en suspension (MES), exprimée en mg/litre, par la technique de filtration et de pesée sèche ;

- la mesure de la "demande chimique en oxygène" (DCO), exprimée en mg/litre, par le procédé d'oxydation au bichromate de potassium des matières oxydables de l'eau ;

- là mesure de la quantité d'azote total de Kjeldahl (NTK), exprimée en mg/litre, par minéralisation sulfurique ; et

- la mesure de l'oxydabilité au permanganate de potassium ($KMnO_4$) en milieu basique à chaud, en mg/litre.

On a effectué par ailleurs des examens biologiques, à savoir :

- une colimétrie microbiologique sur les coliformes totaux (germes bactériens) par la technique des milieux liquides (MPP), avec des cultures à 37°C et un temps d'incubation de 48 heures. Les résultats sont exprimés en nombre de bactéries par 100 ml d'eau en logarithmes de ces valeurs ; et

- une colimétrie microbiologique sur les coliformes fécaux (germes bactériens d'origine fécale) par la technique du repiquage en milieu liquide à la suite de la première colimétrie, avec des cultures à 44°C et un temps d'incubation d'encore 48 heures ; les résultats sont exprimés comme ci-dessus.

Un premier essai concerne le traitement d'eaux polluées prélevées dans une rivière à proximité de rejets d'égouts. On a utilisé l'appareillage d'essais tel que décrit plus haut, avec dans l'injecteur, un Venturi mono-conique (convergent) ayant un coefficient de Venturi Cv tel que défini plus haut d'environ 40. La pression à l'entrée de l'injecteur était de $6.10^5$ pascals. Le traitement a été effectué en continu à partir de 9 heures du matin et des prélèvements pour examen ont été effectués successivement à 9 heures, 12 heures, 17 heures, 21 heures, et 12 et 18 heures le lendemain.

Les résultats des examens physico-chimiques et biologiques sont présentés respectivement dans les tableaux I et II ci-après.

L'étude du tableau I montre que les paramètres mesurés de l'eau traitée par le processus d'oxy-ionisation cavitante de l'invention présentent une compatibilité satisfaisante avec les normes en vigueur, et notamment celles des traitements internationaux recommandés par l'Organisation Mondiale de la Santé, telles qu'exposées notamment dans le "Mémento Technique de l'eau" (Degremont).

L'étude du tableau II permet de constater que le processus d'oxy-ionisation cavitante de l'invention présente un effet anti-microbien notable. En effet, il apparaît qu'après 12 heures de traitement, les nombres de coliformes totaux et fécaux se stabilisent respectivement à des valeurs extrêmement réduites, aucune variation significative n'étant observée par la suite.

Le deuxième essai a été conduit sur les eaux usées d'une station d'épuration en milieu urbain. Plus précisément, les eaux usées ont été prélevées à la station d'épuration en fin de décantation primaire, après dégrillage, dessablage et déshuilage. Les eaux prélevées (échantillon No. 0) ont été traitées de la même manière que ci-dessus avec l'appareillage décrit. Cependant, le Venturi utilisé pour provoquer la cavitation dans l'injecteur hydrocinétique était cette fois de type bi-conique (convergent-divergent), avec un coefficient de Venturi d'environ 100. La pression de l'eau à l'entrée de l'injecteur était de $5,2.10^5$ pascals.

Le traitement a été effectué en continu à partir de 8 heures du matin après transvasement des eaux usées dans l'eau du réservoir tel que défini plus haut (échantillon No. 1). Des prélèvements pour examen ont été effectués dans le réservoir à 8 heures, 11 heures, 16 heures, 20 heures et 24 heures (échantillons Nos. 2 à 6). Après l'arrêt définitif du traitement à 24 heures, un échantillon supplémentaire a été prélevé à 12 heures le lendemain (No. 7).

TABLEAU I

| PROTOCOLES EXPERIMENTAUX | | PH | MES mg/l | DCO mg/l $O_2$ | NTK mg/l N | Matieres$(KM_nO_4)$ organiques mg/l O2 |
|---|---|---|---|---|---|---|
| ECHANTILLON | HEURE | | | | | |
| n° O(témoin) | 9h | 6,90 | 2 | 4 | 2,4 | 1,5 |
| n° 1 | 12h | 7,10 | 7 | 12 | 1,9 | 1,6 |
| n° 2 | 17h | 7,35 | 4 | 8 | 2,4 | 1,5 |
| n° 3 | 21h | 7,40 | 5 | 8 | 2,7 | 1,5 |
| n° 4 | 12h lendemain | 7,55 | 1,5 | 10 | 2,6 | 1,4 |
| n° 5 | 18h lendemain | 7,75 | 0,5 | 8 | 2,8 | 1,3 |

TABLEAU II

| HEURE | 9 h | 12 h | 17 h | 21 h | 12 h lendemain | 18 h lendemain |
|---|---|---|---|---|---|---|
| ECHANTILLON | n° 0 (témoin) | n° 1 | n° 2 | n° 3 | n° 4 | n° 5 |
| Coliformes totaux 100 ml | $2,4 \times 10^3$ ou 3,4 log | 93 ou 1,9 log | $1,5 \times 10^2$ ou 2,2 log | 43 ou 1,6 log | 93 ou 1,9 log | 93 ou 1,9 log |
| Coliformes fécaux 100 ml | $4,6 \times 10^2$ ou 2,7 log | 7 ou 0,8 log | 9 ou 0,9 log | 15 ou 1,2 log | 23 ou 1,4 log | 43 ou 1,6 log |

0225237

Par ailleurs, l'observation pendant le traitement d'un phénomène de floculation a rendu possible l'échantillonnage de floculats, qui ont été prélevés à 11 heures, 16 heures, 24 heures et 12 heures le lendemain.

Les résultats des examens physico-chimiques et biologiques sont présentés respectivement dans les tableaux III et IV ci-après.

L'étude du tableau III montre en particulier qu'un traitement d'oxy-ionisation cavitante pendant 12 heures abaisse substantiellement la quantité de matières organiques en suspension, ce que laissait présager l'apparition de floculats au cours du traitement. De ce fait, la demande chimique en oxygène est également significativement abaissée.

De plus, toujours après 12 heures, l'oxydabilité au permanganate de potassium a sensiblement augmenté. Ceci semble être dû à l'action des ions oxygène négatifs en surnombre.

Enfin, en ce qui concerne l'azote total (NTK), sa baisse significative laisse présager des applications intéressantes en matière de lutte contre la pollution des eaux.

Les résultats de ces examens physico-chimiques des eaux traitées autorisent avantageusement le rejet de celles-ci en rivière.

En ce qui concerne les résultats du point de vue microbiologique, le tableau IV montre que le traitement de l'invention apporte un effet anti-microbien significatif, les taux de coliformes totaux et fécaux chutant substantiellement à partir d'une durée de traitement de 12 heures.

Cependant, on observe que les taux de coliformes augmentent à nouveau sensiblement dès l'arrêt du traitement. Ce phénomène semble être dû au fait que l'on a découvert dans les floculats prélevés un nombre important de germes bactériens, typiquement de l'ordre de 1 à $2,5 \times 10^8$ coliformes totaux/100 ml et de 1 à $4,5 \times 10^7$ coliformes fécaux/100 ml. Ainsi, il apparaît que la cavitation a pour

## TABLEAU III

| HEURE | | | 8h | 11h | 16h | 20h | 24h (arrêt du traitement) | 12h lendemain |
|---|---|---|---|---|---|---|---|---|
| ECHANTILLON | n° 0 (station) | n° 1 (reservoir) | n° 2 | n° 3 | n° 4 | n° 5 | n° 6 | n° 7 |
| pH | 6,85 | 6,55 | 6,55 | 6,80 | 7,20 | 7,20 | 7,30 | 6,95 |
| MES mg/l | 115 | 9 | 6,5 | 6 | 4 | 1,5 | 4 | 4,5 |
| DCO mg/l $O_2$ | 415 | 20 | 20 | 40 | 55 | 12 | 12 | 12 |
| N.T.K. mg/l N | 68 | 2,85 | 3,7 | 2,8 | 3,4 | 1,9 | 2,3 | 2,7 |
| Oxydabilité au $KMnO_4$ mg/l $O_2$ | 58 | 0,7 | 0,4 | 0,4 | 2,2 | 2,3 | 2,2 | 2,2 |

TABLEAU IV

| HEURE | | | 8 h | 11 h | 16 h | 20 h | 24 h (arrêt du traitement) | 12 h lende-main |
|---|---|---|---|---|---|---|---|---|
| ECHANTILLON | n° 0 (Station) | n° 1 (Reservoir) | n° 2 | n° 3 | n° 4 | n° 5 | n° 6 | n° 7 |
| Coliformes totaux pour 100 ml | $4,6 \times 10^6$ ou 6,7 log | $4,6 \times 10^5$ ou 5,7 log | $2,1 \times 10^4$ ou 4,3 log | $2,4 \times 10^4$ ou 4,3 log | $2,4 \times 10^4$ ou 4,3 log | $2,4 \times 10^4$ ou 4,3 log | 94 ou 1,9 log | $4,6 \times 10^3$ ou 3,7 log |
| Coliformes fécaux pour 100 ml | $4,6 \times 10^6$ ou 6,7 log | $2,1 \times 10^5$ ou 5,3 log | $2,1 \times 10^4$ ou 4,3 log | $1,1 \times 10^4$ ou 4,0 log | $1,1 \times 10^4$ ou 4,0 log | $2,4 \times 10^3$ ou 3,4 log | 7 ou 0,8 log | $1,5 \times 10^3$ ou 3,2 log |

14

0225237

effet de précipiter les germes vivants avec les matières organiques en suspension. Cependant, dès que le traitement cesse, ces germes colonisent à nouveau le milieu aqueux.

Ce second essai confirme donc les résultats obtenus dans le premier essai. On note en particulier un effet anti-microbien et un effet de floculation des matières organiques et des germes vivants en suspension. Ainsi, l'eau devient progressivement claire et les floculats se décantent sans traitement chimique supplémentaire. Il est ensuite facile de les évacuer.

A cet égard, on notera que les boues qui seront obtenues par décantation des floculats pourront être exploitées sur des lits de séchage pour un compostage ultérieur.

Il semble cependant, en comparant ces deux essais, que des résultats plus avantageux sont obtenus lorsque l'on fait appel à un Venturi mono-conique (convergent) ayant un coefficient de Venturi de l'ordre de 40, et lorsque la pression l'eau à l'entrée de l'injecteur est de $6.10^5$ pascals.

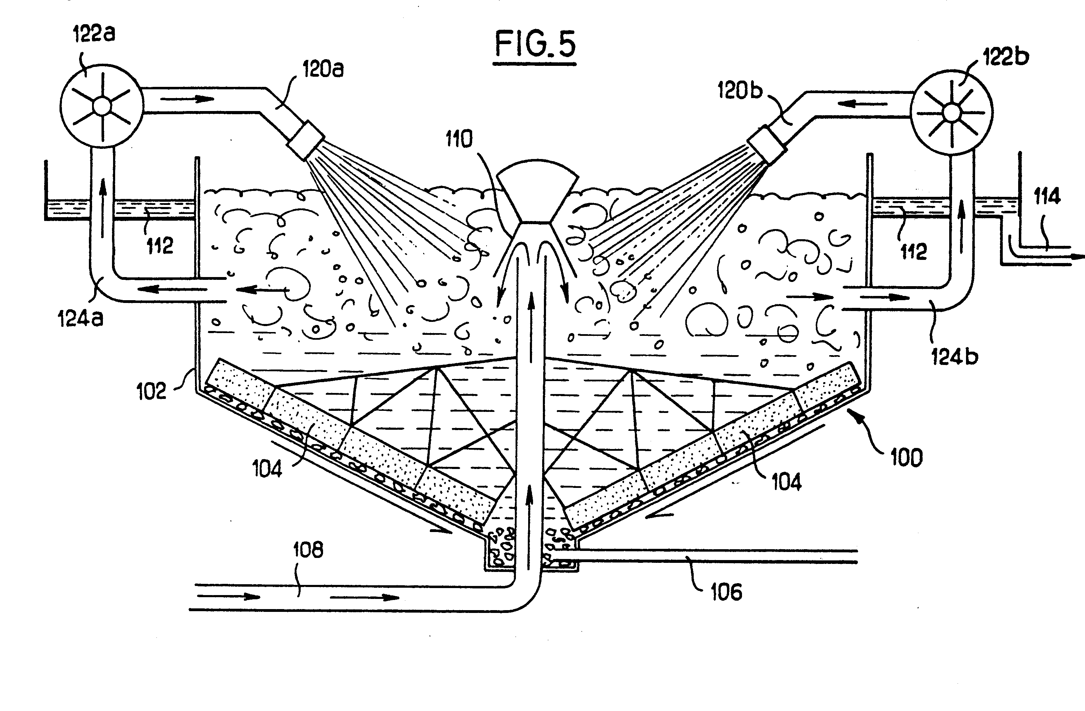

Sur la figure 5 est représentée, schématiquement et en coupe partielle, une installation industrielle de traitement des eaux usées par cavitation, avec floculation et décantation, conforme à la présente invention.

En 100 est indiquée dans son ensemble une installation d'épuration primaire de type circulateur raclé. Cette installation comprend un réservoir 102 à fond conique. Dans le fond du réservoir 102 sont disposés une série de racleurs 104 qui sont agencés pour être mis en rotation à vitesse relativement lente afin de ramener progressivement vers le centre du cône, par gravité, les matières telles que les floculats qui se sont déposées sur le cône par décantation. Un conduit 106 permet l'évacuation des floculats décantés, par exemple vers une installation de compostage ou des lits de séchage.

Un conduit d'arrivée 108 s'étend verticalement au centre du réservoir 102 et est destiné à amener dans la région centrale supérieure de ce dernier les eaux résiduaires urbaines issues notamment d'une installation de décantation primaire de la station d'épuration. Ces eaux sont déviées vers le bas au sommet du conduit 108 par des éléments déviateurs 110.

Enfin, une telle installation comprend conventionnellement une couronne de récupération 112 et un conduit de sortie 114 des eaux épurées, par exemple pour leur rejet en rivière.

L'installation telle que décrite ci-dessus est équipée de deux injecteurs hydrocinétiques selon la présente invention, respectivement indiqués en 120a et 120b. Ces injecteurs sont sensiblement conformes à celui qui a été décrit et représenté sur les figure 1 à 3, et il n'est pas nécessaire de reprendre ici leur description détaillée. Comme on le voit chaque injecteur est associé à une pompe, respectivement 122a et 122b, et à un conduit de reprise, respectivement 124a et 124b, s'étendant à une hauteur intermédiaire dans le réservoir.

Les deux injecteurs sont inclinés vers le bas vers la surface de l'eau d'un angle compris entre 20° et 40°, et s'étendent dans un plan diamétral du réservoir. De façon préférée, la distance entre l'orifice-fente de chaque injecteur et la surface de l'eau est comprise entre 2 et 50 cm.

Une telle installation combine les effets d'épuration de la floculation, tels qu'indiqués plus haut, avec une évacuation permanente des floculats formés par les racleurs 104.

L'installation telle que décrite ci-dessus est avantageuse en ce que son emplacement immédiatement en aval d'un décanteur primaire permet d'obtenir une eau ayant des caractéristiques telles qu'elle peut être directement rejetée en rivière.

Bien entendu, la présente invention ne se limite pas à la configuration de l'installation décrite ci-dessus. En particulier, on pourra prévoir des injecteurs en nombre et en orientation quelconques.

Par ailleurs, des essais ont été effectués par le demandeur pour traiter avec un dispositif conforme à la présente invention de l'eau enrichie en nitrates.

L'essai a été effectué dans une cuve de 1200 litres contenant de l'eau ayant une teneur en nitrates de 50 mg/l avec un injecteur hydrodynamique selon la présente invention alimenté sous une pression de $4.10^5$ pascals à l'aide d'une pompe d'une puissance de 3 kW.

On a observé les résultats suivants :

- une réduction substantielle du taux de nitrates, et plus précisément de 50 mg/l à 20 mg/l dès la troisième heure, et à 10 mg/l à la sixième heure,

- un maintien du taux d'oxygène dissous dans l'eau à une valeur de l'ordre de 6 à 7 mg/l, et ce malgré l'augmentation de température due au phénomène de cavitation,

- un maintien du taux de nitrites et de la dureté de l'eau respectivement à 0,05 mg/l et à 10,7° DH (normes françaises); et

- un maintien du pH à une valeur comprise entre 7,5 et 7,8 pendant toute la durée du traitement.

De la sorte, un dispositif de l'invention pourra être utilisée particulièrement avantageusement pour obtenir à sa sortie une eau de consommation.

Par ailleurs, la présente invention n'est pas limitée aux applications indiquées tout au long de la description ci-dessus. On pourra en particulier utiliser des injecteurs hydrocinétiques pour le traitement d'eaux rejetées dans diverses sortes d'industries, telles que les laiteries (écrémage) et les abattoirs, dans l'industrie pétrolière pour éliminer les phénols, etc. L'invention s'applique également à la pisciculture et à l'aquaculture (oxygénation), et d'une façon générale dès qu'il est nécessaire de modifier les caractéristiques d'un milieu fluide par effet de cavitation, avec vibrations infra-

18

soniques et création d'ions oxygène négatifs.

En ce qui concerne la pisciculture, l'oxygénation de l'eau provoquée par des injecteurs conformes à la présente invention s'est avérée en pratique accélérer la croissance des poissons dans une mesure importante.

Enfin, bien que l'on ait décrit dans ce qui précède des injecteurs comportant un étranglement tronconique, il est bien entendu que l'invention ne se limite pas à ce genre de configuration géométrique de révolution autour de l'axe de l'injecteur.

Ainsi, l'étranglement pourra présenter toute autre forme appropriée, et en particulier avoir un coefficient de venturi qui sera choisi dans une vaste gamme de valeurs en fonction du degré d'oxygénation souhaité et de la fréquence souhaité des ondes infra-soniques.

En outre, la pression d'alimentation du ou des injecteurs sera choisie notamment en fonction des quantités de liquide à traiter et pourra atteindre $10.10^5$ pascals ou davantage.

19

0225237

R E V E N D I C A T I O N S

1.- Dispositif pour le traitement d'un liquide par injection hydrocinétique, afin d'intervenir sur sa nature physico-chimique et/ou biologique, caractérisé en ce qu'il comprend au moins un injecteur constitué par :

. un conduit (22) d'arrivée d'eau sous pression ;

. un étranglement convergent (26) à effet de Venturi disposé dans le conduit;

. une chambre d'expansion (28) disposée immédiatement en aval dudit étranglement ;

. une chambre de mise en forme (40a) dont la section présente une dimension horizontale sensiblement supérieure à celle de la chambre d'expansion et une dimension verticale sensiblement inférieure à celle de la chambre d'expansion ; et

. une chambre d'accélération (40b), formant également orifice de sortie en forme de fente, d'une section plus petite que la section de la chambre de mise en forme ;

chaque injecteur engendrant ainsi un écoulement lamelliforme d'eau cavitante à grande vitesse, en donnant naissance à des vibrations infra-soniques et à des ions oxygène négatifs dans la phase vapeur de l'écoulement ;

chaque injecteur étant disposé au-dessus de la surface libre d'une masse de liquide à traiter contenue dans un réservoir avec une inclinaison de l'ordre de 20 à 40° par rapport à celle-ci, et avec une distance verticale entre son orifice-fente de sortie et ladite surface comprise entre 2 et 50 cm, et l'orifice-fente de sortie s'étendant sensiblement parallèlement à ladite surface.

2.- Dispositif selon la revendication 1, caractérisé en ce qu'il comprend en outre des moyens à conduit de reprise (124a, 124b) et à pompe (122a, 122b) pour ramener le liquide à traiter du réservoir vers l'entrée du ou des injecteurs (120a, 120b).

3.- Dispositif selon l'une quelconque des revendications 1 et 2, caractérisé en ce que la pression à l'entrée de chaque injecteur est comprise entre 2 et $10.10^5$ pascals.

4.- Dispositif selon l'une quelconque des revendications 1 à 3, caractérisé en ce que l'étranglement convergent (26) est tronconique.

5.- Dispositif selon la revendication 4, caractérisé en ce que l'étranglement tronconique (26) a un coefficient de Venturi (Cv) compris entre 1 et 400.

6.- Dispositif selon l'une quelconque des revendications 1 à 5, caractérisé en ce que l'étranglement convergent à effet de Venturi est conçu pour engendrer des vibrations infra-soniques.

7.- Dispositif selon l'une quelconque des revendications 1 à 6, caractérisé en ce que le réservoir (102) est celui d'une installation d'épuration primaire d'eaux résiduaires, qu'il comporte un fond conique et des moyens racleurs (104) prévus dans la région dudit fond.

8.- Dispositif selon la revendication 7, caractérisé en ce qu'il comprend deux injecteurs hydrocinétiques (120a, 120b) tournés l'un vers l'autre et comportant chacun leurs propres moyens à conduit de reprise et pompe.

9. Application du dispositif selon l'une quelconque des revendications 1 à 6 au traitement de liquides choisis dans le groupe comprenant les eaux résiduaires, les eaux de rejet industrielles et agricoles, les eaux de consommation chargés en nitrates.

10. Application du dispositif selon l'une quelconque des revendications 1 à 6 au traitement des eaux de pisciculture ou d'aquaculture.

FIG_1

FIG.2

FIG.3

FIG.4

FIG.5

122a

120a

110

120b

122b

114

112

112

124a

124b

102

100

104

104

108

106

3/3

0225237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 380 226 (BAYER) <br> * Page 7, revendications 1,6; figure * <br><br> --- | 1,9 | B 01 F 5/04 <br> F 04 F 5/46 <br> C 02 F 3/20 <br> A 01 K 63/04 |
| A | FR-A-2 409 234 (CLEVEPAK CORP.) <br> * Page 1, ligne 21 - page 2, ligne 28; page 5, ligne 35 - page 6, ligne 14 * <br><br> --- | 1,9 | |
| A | FR-A-2 327 200 (M. SADOULET) <br><br> * Page 6, revendications 1,4; page 3, ligne 38 - page 5, ligne 10 * <br><br> --- | 1,2,7, 9 | |
| A | GB-A-2 096 911 (D.R. PRICE) <br><br> * Page de garde, résumé; figures 1,5 * <br><br> --- | | **DOMAINES TECHNIQUES RECHERCHES (Int. Cl.4)** <br><br> C 02 F <br> B 01 F <br> F 04 F <br> A 61 H |
| A | GB-A-2 016 940 (BATTELLE MEMORIAL INSTITUTE) <br> * Page de garde; résumé; figure * <br><br> ---     -/- | | |

Le présent rapport de recherche a été établi pour toutes les revendications

| Lieu de la recherche | Date d'achèvement de la recherche | Examinateur |
|---|---|---|
| LA HAYE | 26-01-1987 | TEPLY J. |

Office européen
des brevets

**RAPPORT DE RECHERCHE EUROPEENNE**

0225237
Numéro de la demande

EP 86 40 2440

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS OF THE NATIONAL CONFERENCE ON FLUID POWER, 25-27 octobre 1977, Chicago, Ill., US; vol. 31, 33ième Conférence Annuelle, pages 127-133, National Fluid Power Association and Fluid Power Society; Z. FOX. "Cavitating venturies & sonic nozzles" * Pages 127-129 * | | |

-----

DOMAINES TECHNIQUES
RECHERCHES (Int. Cl.4)

Le present rapport de recherche a été établi pour toutes les revendications

| Lieu de la recherche | Date d'achèvement de la recherche | Examinateur |
|---|---|---|
| LA HAYE | 26-01-1987 | TEPLY J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82